# EUROPÄISCHE PATENTANMELDUNG

(11) **EP 4 830 809 A1**
(43) Veröffentlichungstag der Anmeldung: **28.10.2026**
(21) Anmeldenummer: 26173748.0
(22) Anmeldetag: 21.04.2026
(51) Int. Cl.: B01D 39/06, A41D 13/11, A62B 23/02, B01D 53/02, B01J 20/20, B01J 20/28, B01J 20/30, C01B 32/318

(54) **CHITOSAN BASIERTE AEROGEL-FILTER**

(30) Priorität: 25.04.2025 DE 102025116045
(71) Anmelder: Deutsches Zentrum für Luft- und Raumfahrt e.V., 53227 Bonn (DE)
(72) Erfinder: Sgraja, Martin, 51147 Köln (DE); Milow, Barbara, 51147 Köln (DE); Dzierbinski, Adam, 51147 Köln (DE)
(74) Vertreter: dompatent

(57) **Zusammenfassung**

Die vorliegende Erfindung betrifft die Verwendung von Chitin oder dessen Derivaten zur Herstellung von hochporösen Aerogelen, welche als Filter Anwendung finden. Bei den Filtern kann es sich um Gasfilter beispielsweise für Atemmasken handeln.

## Beschreibung

Die vorliegende Erfindung betrifft die Verwendung von Chitin oder dessen Derivaten zur Herstellung von hochporösen Aerogelen, welche als Filter Anwendung finden. Bei den Filtern kann es sich um Gasfilter beispielsweise für Atemmasken handeln.

In vielen Bereichen wie der Chemie, der Pharma- und Lebensmittelindustrie sowie bei der Feuerwehr und bei Rettungsdiensten ist der Atemschutz ein essentielles Mittel zum Schutz der Arbeitenden gegen gesundheitsschädliche Stoffe. Diese reichen von Aerosolen wie Krankheitserregern oder Schleifstaub bis hin zu giftigen Gasen und Dämpfen. Unterschieden wird dabei zwischen partikulären und gasförmigen Schadstoffen, die mittels Partikel- beziehungsweise Gasfilter gefiltert werden. Zusätzlich gibt es zweistufige Filter, die sowohl eine Stufe zur Partikelfilterung wie auch eine Stufe zur Gasfilterung umfassen.

Eingesetzt werden für die Gasfilter hauptsächlich Aktivkohlen, die über die Karbonisierung und Aktivierung von zumeist Kokosnussschalen aber auch Kohle, und Nadel- sowie Laubholz hergestellt werden. Dabei spielt die große innere Oberfläche zusammen mit der mikroporösen Struktur der Aktivkohle eine entscheidende Rolle für die Adsorption der Schadstoffe aus dem Gasstrom oder aus Wasser.

Der Vorteil der Verwendung von Aktivkohle als Filtermaterial liegt darin, dass er nicht toxisch ist. Nachteilig ist jedoch, dass die Rohstoffe der Aktivkohle beziehungsweise die Aktivkohle selbst zumeist lange Transportwege aufweisen. Der ökologische Fußabdruck ist entsprechend groß und die Verwendung von Aktivkohle daher nicht nachhaltig.

Die Entwicklung und Optimierung solcher Filtermaterialien spielt eine entscheidende Rolle in der Umwelttechnik und der öffentlichen Gesundheitsvorsorge, insbesondere im Hinblick auf die wachsende Notwendigkeit, schädliche Partikel und Chemikalien aus der Umwelt oder Verbrauchsprodukten zu entfernen. Es besteht daher Bedarf an einem alternativen Material, welches geeignet ist, als Filter für Gase verwendet zu werden, welches ebenso effektiv wie Aktivkohle ist, aber einen deutlich geringen ökologischen Fußabdruck aufweist. Überraschenderweise hat sich gezeigt, dass dies mit speziellen Aerogelen möglich ist. Karbonisierte Aerogele aus Chitosan oder Chitin bieten eine umweltfreundliche Alternative zu synthetischen Filtermaterialien und unterstützen gleichzeitig die Bemühungen zur Nachhaltigkeit in der Materialwissenschaft. In einer ersten Ausführungsform wird die der vorliegenden Erfindung zu Grunde liegende Aufgabe gelöst durch die Verwendung von karbonisierten Aerogelen von Chitosan oder Chitin als Filtermaterial insbesondere für Gasfilter.

Chitosan und Chitin sind biobasierte Polymere, die durch ihr natürliches Vorkommen und ihre biologische Eigenschaften bekannt sind. Über einen mehrstufigen Prozess, der auch eine Karbonisierung umfasst, ist es möglich diese Materialien in Kohlenstoff-Aerogele umzuwandeln, die eine besonders poröse Struktur aufweisen können. Diese charakteristische Struktur bietet sich gut für die Filtration von Gasen an, da sie eine bemerkenswerte Oberfläche bieten und zudem eine hohe chemische Beständigkeit aufweist.

Karbonisierte Aerogele aus Chitosan oder Chitin ermöglichen eine nachhaltige Option für Filteranwendungen, da sie aus erneuerbaren Ressourcen gewonnen werden. Die Filtrationsleistung dieser Materialien wird durch ihre intrinsische Porosität unterstützt, die eine effiziente Selektivität bei der Entfernung von Verunreinigungen fördert. Dies kann sie zu geeigneten Kandidaten für Anwendungen in der Luftreinhaltung machen, wobei organische und anorganische Schadstoffe effektiv aus den zu filternden Medien entfernt werden können. Außerdem unterstützen die thermischen und mechanischen Stabilitätseigenschaften der karbonisierten Aerogele ihre Einsatzfähigkeit in anspruchsvollen Umgebungen, wie sie oft bei industriellen Anwendungen auftreten. Ihre Fähigkeit zur Adsorption einer Vielzahl von Schadstoffen, ohne die physikalische und chemische Integrität zu beeinflussen, kann einen Fortschritt in der Entwicklung von Filtermaterialien darstellen und ist von Interesse für Umweltschutz und Nachhaltigkeit.

Chitin ist das nach Cellulose zweithäufigste Biopolymer der Welt. Chitin ist unter anderem ungiftig, antimikrobiell und biologisch abbaubar. Es findet daher in Gesundheitsprodukten und Kosmetika Anwendung. Es kommt in der Natur überwiegend in skelettalen Strukturen von Krustentieren, Insekten und Pilzen vor, wobei 70 - 75 % des weltweit verwendeten Chitins aus Garnelen- und Krabbenschalen extrahiert wird. Es sind auch Aerogele bekannt, die basierend auf Chitin beziehungsweise Chitosan hergestellt werden. So offenbart DE 10 2015 203 384 B4 Chitosan- und Chitin-Aerogele, die funktionelle Ureidogruppen am C2-Atom des Chitosans oder Chitins enthalten. Zur Verarbeitung von Chitin wird dieses häufig zu Chitosan modifiziert. Hierbei wird ein Anteil von > 50 % der Acetylgruppen entfernt, wodurch die Wasserlöslichkeit verbessert wird.

Die Verwendung von Chitosan beziehungsweise Chitin erschließt somit eine neue preisgünstige Rohstoffquelle und verringert zusätzlich die ökologischen Probleme bei der Deponierung. Zusätzlich ist der Rohstoff in Deutschland und der Europäischen Union verfügbar, was Kosten und CO₂-Ausstoß durch kürzere Transportwege senkt.

Die Herstellung der Aerogele erfolgt nach an sich bekannten Verfahren. Hierfür werden Chitosan oder Chitin zunächst in VE-Wasser dispergiert. Der Gewichtsanteil an Chitosan beziehungsweise Chitin beträgt etwa 1 Gew.-% bis 5 Gew.-%. Anschließend wird eine Säure, insbesondere eine nicht-oxidierende Säure (beispielsweise Essigsäure) zugegeben und die Suspension/Lösung gerührt. Die Gesamtkonzentration an Säure beträgt 2 Gew.-% bis 4 Gew.-%. Die Angaben in Gew.-% beziehen sich dabei jeweils auf die Gesamtmenge der Lösung beziehungsweise Dispersion.

Die Lösung wird in ein Regenerationsbad, welches eine Lauge (beispielsweise Natronlauge) enthält, vertropft und über Nacht (üblicherweise 10 bis 20 Stunden) altern gelassen.

Anschließend wir der pH-Wert des Regenerationsbades mittels einer nicht-oxidierenden Säure (vorzugsweise handelt es sich um die gleiche Säure wie zu Beginn der Herstellung) auf 8-9 abgesenkt. Die erhaltenen Beads werden so lange mit Wasser (üblicherweise Leitungswasser oder vollentsalztes (VE) Wasser) gewaschen, bis der pH-Wert der Lösung dem des Wassers entspricht. Das Wasser wird dann in üblichen Verfahren gegen reines Ethanol ausgetauscht. Anschließend erfolgt die überkritische Trocknung.

Dies entspricht dem üblichen Verfahren zur Herstellung von Aerogelen, welches dem Fachmann hinlänglich bekannt ist und beispielsweise in DE 10 2015 203 384 B4 oder auch in EP 4 534 478 A1 beschrieben ist. Der Prozess der Herstellung der Aerogele, das heißt das Auflösen des Rohstoffes und die anschließende Bildung der Porenstruktur, ermöglicht eine genaue Kontrolle der Porenverteilung und damit der Einstellung der Oberfläche.

Um als Filtermaterial verwendet zu werden, werden die Aerogele anschließend noch karbonisiert und optional aktiviert, so dass man Kohlenstoff-Aerogele erhält. Neben der Gelierung sind diese beiden Schritte entscheidend, um eine hohe Oberfläche mit Mikroporen, die vielfach für die Adsorption entscheidend sind, zu realisieren.

Auch bei anderen bekannten Rohstoffen, wie Holz, Kokosnussschalen und Kohle, welche üblicherweise zur Herstellung von Aktivkohle eingesetzt werden, sind eine Karbonisierung und eine Aktivierung üblich. Bei diesen Materialien sind Porengröße und -verteilung primär durch die natürlich vorkommende Struktur festgelegt und unterliegen natürlichen Schwankungen. Die für die Adsorption notwendige Mikrostruktur wird dann durch Karbonisierung und Aktivierung erhalten.

Eine erste Ausführungsform der vorliegenden Erfindung ist die Verwendung von karbonisierten Aerogelen von Chitosan oder Chitin als Filtermaterial insbesondere als Gasfilter für Atemschutzmasken, dadurch gekennzeichnet, dass die spezifische Mikroporen-Oberfläche der Aerogele von 500 m²/g bis 2500 m²/g beträgt; und
die Aerogele ein Mikroporenvolumen von 0,1 cm³/g bis 0,8 cm³/g aufweisen.

Die Entwicklung von Gasfiltern unterscheidet sich grundlegend von der von Flüssigkeitsfiltern, da bei Gasen andere physikalische Mechanismen dominieren. Während Flüssigkeitsfilter häufig auf mechanischer Abscheidung, Siebwirkung oder Trägheitseffekten beruhen, müssen Gasfilter vor allem auf molekularer Ebene arbeiten. Gasförmige Schadstoffe sind deutlich kleiner, beweglicher und diffundieren schneller, sodass sie nicht einfach "herausgefiltert" werden können, sondern aktiv an Oberflächen adsorbiert werden müssen. Deshalb spielen bei Gasfiltern Parameter wie spezifische Oberfläche, Porengrößenverteilung, Oberflächenchemie und Kontaktzeit eine entscheidende Rolle, während bei Flüssigkeiten eher Durchfluss, Druckverlust und Partikelgröße im Vordergrund stehen.

Vor diesem Hintergrund bieten karbonisierte Aerogele mit spezifischen Oberflächen im Bereich von 500 m²/g bis 2500 m²/g und Mikroporenvolumina von 0,1 cm³/g bis 0,8 cm³/g erhebliche Vorteile. Ihre extrem hohe innere Oberfläche ermöglicht eine sehr effektive Adsorption selbst kleinster Gasmoleküle, während die gezielt einstellbare Mikroporenstruktur eine hohe Selektivität gegenüber bestimmten Schadstoffen erlaubt. Gleichzeitig sind Aerogele aufgrund ihrer offenen, vernetzten Struktur besonders leicht und weisen einen vergleichsweise geringen Strömungswiderstand auf, was für den Einsatz in Atemschutzmasken entscheidend ist. Die Karbonisierung verbessert zusätzlich die chemische und thermische Stabilität sowie die Wechselwirkungen mit organischen Verbindungen.

Im Vergleich zu herkömmlicher Aktivkohle bieten solche karbonisierten Aerogele mehrere entscheidende Vorteile. Aktivkohle besitzt zwar ebenfalls eine hohe Oberfläche, jedoch ist ihre Porenstruktur oft weniger homogen und schlechter kontrollierbar. Aerogele ermöglichen dagegen eine präzisere Einstellung von Porengröße und -verteilung, wodurch die Adsorption gezielter und effizienter erfolgen kann. Zudem neigt Aktivkohle bei hoher Beladung oder Feuchtigkeit eher zu Porenblockierung, während Aerogele durch ihre offenere Struktur eine bessere Zugänglichkeit der aktiven Oberflächen behalten. Auch hinsichtlich Gewicht und mechanischer Anpassbarkeit (z. B. als monolithische oder flexible Strukturen) sind Aerogele überlegen, was sie besonders attraktiv für moderne, leistungsfähige und gleichzeitig komfortable Gasfiltersysteme macht.

Da bei den erfindungsgemäß verwendeten Aerogelen die Porenstruktur der Aerogele bereits bei der Herstellung kontrollierbar und einstellbar ist (beispielsweise durch die Geschwindigkeit der Gelbildung, Kontrolle des pH-Wertes, Zugabe von Additiven und andere dem Fachmann bekannte Maßnahmen), erhält man eine homogene Struktur auch im Hinblick auf Porengröße und Porenverteilung. Durch die Karbonisierung entstehen Mikroporen, die die Verwendung als besonders effektives Filtermaterial ermöglichen. Werden Materialien gefiltert, füllen sich zunächst die kleinen Poren der Aerogele, da dies thermodynamisch auf Grund des geringen Lennard-Jones-Potenzials bevorzugt ist. Möglichst viele kleine Poren ermöglichen somit eine rasche, effektive Filterung, was insbesondere bei der Verwendung als Atemschutzfilter notwendig und von Interesse ist. Zudem werden bei kleinen Poren die ausgefilterten Schadstoffe fester in den Poren gehalten und können nicht einfach wieder ausgespült werden.

Die Nutzung von karbonisierten Aerogelen aus Chitosan oder Chitin als Filtermaterial wird durch ihre teilweise mikroporöse Struktur unterstützt. Mikroporös im Sinne der vorliegenden Anmeldung bedeutet, dass das Aerogel Porengrößen unterhalb von 2 nm aufweist.

Diese mikroporöse Struktur beeinflusst wesentlich die Filtrationsprozesse. Aerogele, die Mikroporosität besitzen, weisen äußerst kleine Porengrößen auf, die eine große Oberfläche bereitstellen können, was sich für die Adsorption von Schadstoffen als geeignet erweist. Durch die mikroporöse Struktur können diese Aerogele eine selektive Adsorption ermöglichen, indem sie spezielle Moleküle bei Gas- und Flüssigkeitsfiltrationen binden. Die Mikroporosität trägt zur Verbesserung der Filterkapazität und der Adsorptionsrate bei und unterstützt die effektive Entfernung selbst feinster Verunreinigungen aus der Luft. Dies ist vorteilhaft für Anwendungen, die eine gereinigte und präzise Umsetzung wünschen, wie beispielsweise bei der Reinigung von Luft in Reinräumen oder bei der Behandlung medizinischer Abfälle. Darüber hinaus kann sich die mikroporöse Struktur positiv auf die mechanische Stabilität des Filtermaterials auswirken. Sie kann die strukturelle Integrität des Aerogels auch nach längerer Anwendung und unter wechselnden Bedingungen erhalten. Dies erweitert die Anwendungsmöglichkeiten der Aerogele und unterstützt ihre Beständigkeit gegen physikalische und chemische Belastungen. Die Kombinierbarkeit der Eigenschaften der Aerogele mit ihrer mikroporösen Struktur bietet eine innovative Lösung für Filtrationsherausforderungen. Sie ist besonders vorteilhaft in Szenarien, in denen Präzision und Effizienz bei der Filtration gemeinsam mit nachhaltigen Materialien angestrebt werden. Die mikroporöse Struktur der karbonisierten Aerogele kann die Funktionalität und Effizienz als Filtermaterial merklich stärken.

Karbonisierte Aerogele aus Chitosan oder Chitin weisen eine beeindruckende spezifische Oberfläche auf, die insbesondere im Bereich von 500 m²/g bis 3000 m²/g liegt, insbesondere bevorzugt zwischen 750 m²/g und 2500 m²/g, und besonders vorteilhaft zwischen 1000 m²/g und 2000 m²/g. Diese hohe spezifische Oberfläche kann ihre Fähigkeit fördern, als Filtermaterial effektiv eingesetzt zu werden.

Die spezifische Oberfläche wird bestimmt durch Stickstoff-Physisorption mittels BET-Methode, deren Auswertebereich für mikroporöse Proben so angepasst wird, dass die Gültigkeit der BET-Gleichung erhalten bleibt. Die BET-Methode zur Bestimmung der Porengröße ist dem Fachmann hinlänglich bekannt. Vor der Bestimmung der spezifischen Oberfläche wird die Probe sorgfältig entgast. Bei der Bestimmung der Oberfläche mikroporöser Proben ist der Bereich des Relativdruck niedriger als bei meso- oder makroporösen Proben, so dass dieser im Rahmen fachmännisch üblichen Handelns angepasst werden muss.

Die große spezifische Oberfläche der Aerogele kann die Adsorptionskapazität verbessern, da eine Vielzahl aktiver Stellen zur Bindung von Schadstoffen zur Verfügung stehen könnte. Dadurch wird es möglich, Schadstoffe zuverlässig aus Gasen zu entfernen. Solche Eigenschaften sind möglicherweise vorteilhaft in industriellen Prozessen, bei denen umfassende und zuverlässige Filtration gefragt ist, um hohe Reinheitsstandards zu unterstützen. Darüber hinaus kann die hohe spezifische Oberfläche zur Effizienzsteigerung des Filtrationsprozesses beitragen, da sie die Geschwindigkeit und die Gesamtkapazität der Adsorption fördert. Dies kann Anwendungen unterstützen, wobei zeitabhängige Filtrationsprozesse geeignet sind, wie etwa in der Luftfiltration in stark frequentierten Bereichen. Die Kombination aus Mikroporosität und einer hohen spezifischen Oberfläche kann die karbonisierten Aerogele zu einer hochwertigen Option zur Verbesserung von Filtrationstechnologien machen. Der Einsatz dieser Materialien könnte die Leistungsfähigkeit und Nachhaltigkeit verbessern und bietet eine vielversprechende Alternative gegenüber herkömmlichen Filtrationsmaterialien. Die spezifische Oberfläche ist ein Aspekt, der die Effektivität und Vielseitigkeit der Aerogele hervorhebt.

Auch nach der Karbonisierung weist das erfindungsgemäß verwendete Chitin-Aerogel beziehungsweise Chitosan-Aerogel noch funktionelle Gruppen auf, die Stickstoff enthalten. Diese erlauben eine vielfältige und gleichzeitig spezifische Modifikation der Oberfläche zur Adsorption verschiedenster schädlicher Gase. Jedoch auch ohne eine Modifizierung ermöglichen die Stickstoffgruppen eine besondere Aktivität im Vergleich zu anderen Adsorptionsmaterialien, bei welcher überwiegend Kohlenstoffatome und Sauerstoffatome als Bindungspartner für Gase, die ausgefiltert werden sollen, zur Verfügung stehen.

Um die gewünschten Eigenschaften für die beanspruchte Verwendung zu erhalten, werden die Aerogele karbonisiert. Bei der Karbonisierung werden die Aerogele in einer inerten Atmosphäre erhitzt. Bei der inerten Atmosphäre handelt es sich insbesondere um eine Stickstoff-, Argon- oder Helium-Atmosphäre.

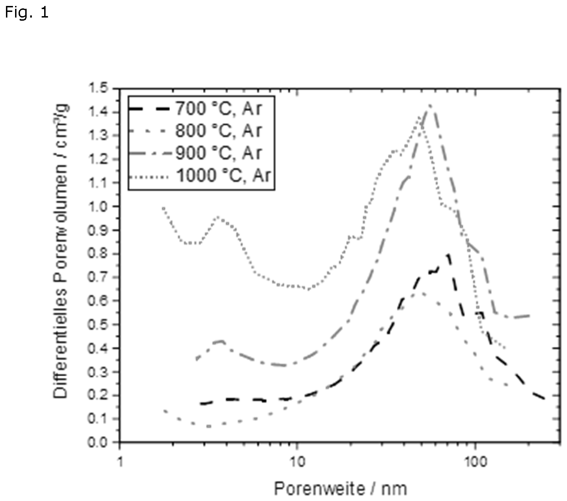

Die Aerogele werden dann ausgehend von Raumtemperatur (Raumtemperatur sind dabei üblicherweise 20 °C bis 25 °C) in einer konstanten Rate von 2 bis 20 K/min, insbesondere von 5 bis 10 K/min auf eine Temperatur von 600 °C bis 1200 °C, insbesondere von 700 °C bis 1100 °C erhitzt und diese Temperatur über einen Zeitraum von 30 Minuten bis 4 Stunden, insbesondere von 30 Minuten bis 2 Stunden, gehalten. Übliche Porengrößenverteilungen nach der Karbonisierung bei unterschiedlichen Temperaturen, nämlich bei 700 °C, 800 °C, 900 °C und 1000 °C in Argon-Atmosphäre sind in Fig. 1 dargestellt.

Im Anschluss an die Karbonisierung kann eine thermische Aktivierung, beispielsweise mit CO₂, Wasserdampf, KOH oder K₂CO₃, erfolgen.

Die spezifische Mikroporen-Oberfläche der karbonisierten Aerogele aus Chitosan oder Chitin bewirkt eine hohe Effizienz als Filtermaterial. Diese Oberfläche liegt insbesondere im Bereich von 500 m²/g bis 2500 m²/g, wobei vorteilhafte Werte zwischen 600 m²/g und 2000 m²/g und besonders geeignete Werte zwischen 800 m²/g und 1500 m²/g sein können. Diese wurde bestimmt mittels Stickstoff-Physisorption und einer anschließenden Auswertung mittels t-plot-Methode. Carbon Black STSA ("Statistical Thickness Surface Area" für Ruß) wurde hierfür als Thickness-Curve angewendet. Die Bestimmung erfolgte analog ASTM D6556-14 welche im Internet unter https://www.researchgate.net/profile/Steven Barber2/post/Is there a ASTM standard for isotherms of adsorption and deso rption of N2 by activated carbons/attachment/59d6362179197b80779938e9/AS:387187808980992@1469324175244/ download/ASTM+D6556-14+Carbon+Black+Surface+Area als pdf abrufbar ist.

Eine solche spezifische Mikroporen-Oberfläche trägt dazu bei, dass die Aerogele zahlreiche Schadstoffe effektiv adsorbieren und entfernen. Die Mikroporen-Oberfläche unterstützt die Adsorptionsleistung, indem sie eine große Anzahl feiner Poren bietet, in denen Schadstoffe gebunden werden können. Diese Eigenschaft zeigt sich wirkungsvoll für die Abscheidung von Molekülen, die in gasförmigen oder flüssigen Medien vorhanden sind. Solche Materialien können in anspruchsvollen Filtrationsprozessen genutzt werden, bei denen hohe Präzision und Selektivität förderlich sind.

Karbonisierte Aerogele aus Chitosan oder Chitin weisen ein beeindruckendes Mikroporenvolumen auf, das insbesondere im Bereich von 0,1 cm³/g bis 0,8 cm³/g liegt. Optional können vorteilhafte Werte von 0,2 cm³/g bis 0,6 cm³/g, idealerweise von 0,3 cm³/g bis 0,5 cm³/g, erreicht werden. Dieses Mikroporenvolumen erleichtert die Anwendung als effektives Filtermaterial in unterschiedlichen Anwendungen.

Das Mikroporenvolumen wurde bestimmt mittels Stickstoff-Physisorption und eine anschließende Auswertung mittels t-plot-Methode. Carbon Black STSA wurde hierfür als Thickness-Curve angewendet.

Ein solches Mikroporenvolumen kann es den Aerogelen ermöglichen, eine beträchtliche Menge an Schadstoffen aufzunehmen, da die Vielzahl kleiner Poren eine Kapazität für die Bindung von Partikeln und Molekülen bietet. Die spezielle Porenstruktur trägt dazu bei, die Adsorptionskapazität zu steigern und unterstützt die Entfernung von Verunreinigungen aus gasförmigen und flüssigen Medien. Diese Eigenschaft zeigt sich als vorteilhaft für Filtrationsanwendungen, die auf umfassende Reinigung abzielen. Zudem kann das Mikroporenvolumen die Geschwindigkeit des Filtrationsprozesses fördern, indem es eine rasche Aufnahme und Rückhaltung von Schadstoffen ermöglicht. Dies zeigt sich als nützlich in dynamischen Umgebungen, in denen eine schnelle und effektive Filtration wünschenswert sein kann, wie beispielsweise beim Schutz von Umweltstandards oder der Sicherstellung der Luftqualität in industriellen Bereichen. Die Kombination der mikroporösen Struktur, der spezifischen Oberfläche und des Mikroporenvolumens kann diese Aerogele zu einer nachhaltigen und leistungsfähigen Lösung für moderne Filtrationstechnologien machen. Durch die Ausgewogenheit dieser Parameter können die Aerogele die Leistungsfähigkeit und Flexibilität von Filtersystemen fördern, indem sie einen hohen Grad der Filterung und Effizienz in ihrer Anwendung ermöglichen.

Karbonisierte Aerogele aus Chitosan oder Chitin weisen auf ein beträchtliches Porenvolumen hin, das im Bereich von 0,8 cm³/g bis 4 cm³/g liegen kann. Dabei gibt es vorteilhafte Werte von 1,0 cm³/g bis 3,5 cm³/g, mit besonders bevorzugten Bereichen von 1,2 cm³/g bis 3 cm³/g. Dieses Gesamtporenvolumen kann die Wirksamkeit der Aerogele in der Filtration begünstigen.

Die Bestimmung des Porenvolumens erfolgt analog der Bestimmung des Mikroporenvolumens. Zur Bestimmung des Porenvolumens werden vollständige Stickstoff-Isothermen mittels Physisorption aufgenommen und das Porenvolumen bis zu einem Relativdruck von p/p⁰ = 0.99 bestimmt.

Das große Gesamtporenvolumen trägt zu einer erhöhten Kapazität bei, indem es Raum für eine signifikante Menge an Schadstoffaufnahme bietet. Darüber hinaus kann eine breite Porengrößenverteilung mit Mesoporen die Leistung des Filtrationsprozesses verbessern, indem eine schnelle Durchflussrate und effiziente Adsorption ermöglicht werden. Dies kann in Szenarien sinnvoll sein, in denen ein hoher Durchsatz zusammen mit der Aufrechterhaltung strenger Reinheitsanforderungen gefragt ist, etwa in der industriellen Luftaufbereitung. Die Kombination von einem großen Gesamtporenvolumen mit einer spezifischen Mikroporen-Oberfläche und einem erheblichen Mikroporenvolumen optimiert die Eignung der Aerogele als Filtermaterial. Diese Eigenschaften zusammen bieten eine vielversprechende Option für fortschrittliche Filtrationslösungen, die sowohl Effizienz als auch Nachhaltigkeit in ihrer praktischen Anwendung fördern können.

Die Verwendung von karbonisierten Aerogelen aus Chitosan oder Chitin als Gasfilter in Atemschutzmasken kann bemerkenswerte Vorzüge bieten. Aufgrund ihrer Struktur und Materialeigenschaften ermöglichen die Aerogele, effizient als Filterkomponenten zu fungieren.

Das hohe Gesamtporenvolumen und die mikroporöse Struktur können eine beträchtliche spezifische Oberfläche bereitstellen, welche die Adsorptionskapazität für verschiedene Schadstoffe möglicherweise erhöht. Dies ist in Atemschutzmasken vorteilhaft, wo der Schutz vor luftgetragenen schädlichen Verbindungen, angestrebt wird. Aerogele bieten die Gelegenheit, feine Partikel effektiv zu binden, was die Sicherheit und Wirksamkeit der Atemschutzmasken verbessern kann. Darüber hinaus kann die Verwendung von karbonisierten Aerogelen in Atemschutzmasken zur Gewichtsreduktion der Filtermedien beitragen. Aerogele zeichnen sich durch ihre leichte, aber dennoch stabile Struktur aus, was zu einem erhöhten Tragekomfort führt und den gewünschten Schutz unterstützt. Das nachhaltige Profil der Aerogele, da sie aus Chitosan oder Chitin stammen, weist auf den möglichen Einsatz in umweltbewussten Anwendungen hin.

Zusammengefasst können karbonisierte Aerogele von Chitosan oder Chitin als Filtermaterial interessante Möglichkeiten eröffnen, um gegenwärtige Herausforderungen bei der Filtration anzugehen, insbesondere hinsichtlich der effizienten und umweltfreundlichen Behandlung von Gasen. Ihre Eignung für verschiedene Filterkonfigurationen und ihre Kapazität zur Schadstoffentfernung könnten ihre Bedeutung in der modernen Filtertechnologie unterstreichen.

Im nachfolgenden Ausführungsbeispiel wird die vorliegende Erfindung in nicht limitierender Weise weiter erläutert.

### Ausführungsbeispiel:

a) Herstellung von Chitosan-Aerogelen:
   - 3 Gew.-% Chitosan wurden in VE-Wasser dispergiert.
   - Anschließend wurde Essigsäure bis zu einer Gesamtkonzentration von 3 Gew. % zugeben und die Suspension/Lösung für 2 h bei Raumtemperatur (RT) gerührt. Die Rührgeschwindigkeit wurde dabei so gewählt, dass alle Partikel aufgewirbelt wurden jedoch kein Lufteintrag über den Rührer erfolgte. Die Lösung wurde dann über Nacht ohne rühren stehen gelassen.
   - Die Lösung wurde erneut homogenisiert (20 - 40 min bei RT mit derselben Rührgeschwindigkeit wie im vorhergehenden Schritt) und mit einer geeigneten Methode (z.B. JetCutter) in ein Natronlauge- Regenerationsbad (2,5 Gew.-%) vertropft und über Nacht altern gelassen.
   - Am nächsten Tag wurde er pH-Wert des Regenerationsbades mit den entstandenen Aerogel-Beads mit Essigsäure auf 8,5 abgesenkt.
   - Die Beads wurde solange mit Leitungswasser gewaschen bis der pH-Wert der Lösung dem des Leitungswassers entsprach.
   - Anschließend wurde das Wasser gegen reinen Ethanol ausgetauscht und der Vorgang so oft wiederholt bis der Wassergehalt der Dispersion kleiner 5 Gew.-% war.
   - Danach wurde die Beads in Kohlenstoffdioxid bei 115 bar und 60 °C überkritisch getrocknet, wodurch die Chitosan-Aerogele erhalten wurden.
b) Karbonisierung der Chitosan-Aerogele
   - Im Anschluss erfolgte die Karbonisierung der Beads in Argon-Atmosphäre (50 mbar) unter Verwendung des folgenden Temperaturprogramms: $RT {\to }^{5 K / min} 1000 ° C , 2 h {\to }^{Ofenabkühlung} RT$
   - Die hergestellten Produkte zeigten einen mittleren Masseverlust von ca. 95 % und die folgenden mittels Stickstoff-Sorption ermittelten Eigenschaften:
      ∘ spezifische Oberfläche (BET) = 1500 - 2000 m²/g,
      ∘ spezifische Mikroporen-Oberfläche = 800 - 1000 m²/g,
      ∘ Mikroporenvolumen von ca. 0,4 cm³/g und
      ∘ Gesamtporenvolumen = 1,5 - 2,5 cm³/g.

Die Karbonisierung von nach dem unter a) beschriebenen Verfahren wurde auch bei 700 °C, 800 °C und 900 °C durchgeführt. Die Porenverteilung nach der Karbonisierung bei 1000 °C, ebenso wie die bei 700 °C, 800 °C und 900 °C sind in Fig. 1 dargestellt.

## Patentansprüche

1. Verwendung von karbonisierten Aerogelen von Chitosan oder Chitin als Filtermaterial insbesondere als Gasfilter für Atemschutzmasken, **dadurch gekennzeichnet, dass** die spezifische Mikroporen-Oberfläche der Aerogele von 500 m²/g bis 2500 m²/g beträgt; und
die Aerogele ein Mikroporenvolumen von 0,1 cm³/g bis 0,8 cm³/g aufweisen.

2. Verwendung nach Anspruch 1, **dadurch gekennzeichnet, dass** die Aerogele eine mikroporöse Struktur aufweisen.

3. Verwendung nach Anspruch 1 oder 2, **dadurch gekennzeichnet, dass** die Aerogele eine spezifische Oberfläche von 500 m²/g bis 3000 m²/g, insbesondere von 750 m²/g bis 2500 m²/g, insbesondere bevorzugt von 1000 m²/g bis 2000 m²/g besitzen.

4. Verwendung nach zumindest einem der Ansprüche 1 bis 3, **dadurch gekennzeichnet, dass** die spezifische Mikroporen-Oberfläche der Aerogele von 600 m²/g bis 2000 m²/g, besonders bevorzugt von 800 m²/g bis 1500 m²/g beträgt.

5. Verwendung nach zumindest einem der Ansprüche 1 bis 4, **dadurch gekennzeichnet, dass** die Aerogele ein Mikroporenvolumen von 0,2 cm³/g bis 0,6 cm³/g, besonders bevorzugt von 0,3 cm³/g bis 0,5 cm³/g aufweisen.

6. Verwendung nach zumindest einem der Ansprüche 1 bis 5, **dadurch gekennzeichnet, dass** das Porenvolumen der Aerogele von 0,8 cm³/g bis 4 cm³/g, insbesondere von 1,0 cm³/g bis 3,5 cm³/g, besonders bevorzugt von 1,2 cm³/g bis 3 cm³/g beträgt.
